(19) Europäisches Patentamt
European Patent Office
Office européen des brevets

(11) Veröffentlichungsnummer: **0 425 860 A2**

# (12) EUROPÄISCHE PATENTANMELDUNG

(21) Anmeldenummer: **90119550.3**

(22) Anmeldetag: **12.10.90**

(51) Int. Cl.5: **C08K 5/13**, C08L 77/00

Die Bezeichnung der Erfindung wurde geändert (Richtlinien für die Prüfung im EPA, A-III, 7.3).

(30) Priorität: **18.10.89 DE 3934711**

(43) Veröffentlichungstag der Anmeldung: **08.05.91 Patentblatt 91/19**

(84) Benannte Vertragsstaaten: **DE FR GB IT**

(71) Anmelder: **BAYER AG**
**W-5090 Leverkusen 1 Bayerwerk(DE)**

(72) Erfinder: **Heinz, Hans-Detlef, Dr.**
**Breslauerstrasse 31**
**W-4150 Krefeld 11(DE)**
Erfinder: **El Sayed, Aziz, Dr.**
**Saarlauterner Strasse 39**
**W-5090 Leverkusen 1(DE)**
Erfinder: **Dujardin, Ralf, Dr.**
**Bodelschwinghstrasse 18**
**W-4150 Krefeld(DE)**
Erfinder: **Dhein, Rolf, Dr.**
**Deswatinesstrasse 30**
**W-4150 Krefeld(DE)**

## (54) Polyamid-Formmassen enthaltend Bisphenole von hoher Glastemperatur.

(57) Gegenstand der Erfindung sind thermoplastisch verarbeitbare Formmassen auf Basis von Polyamiden und Bisphenolen mit Glastemperaturen größer oder gleich denen der eingesetzten Polyamide, wobei die Bisphenole der Formel

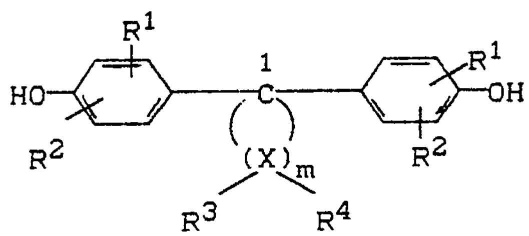

(I)

entsprechen.

Gegenstand der Erfindung ist weiterhin ein Verfahren zu ihrer Herstellung und ihre Verwendung zur Herstellung von Formkörpern, Folien, Fasern und anderen Gegenständen.

EP 0 425 860 A2

# POLYAMID-FORMMASSEN MIT BISPHENOLEN HOHER GLASTEMPERATUR

Gegenstand der Erfindung sind thermoplastisch verarbeitbare Formmassen auf Basis von Polyamiden und Bisphenolen mit Glastemperaturen größer oder gleich denen der eingesetzten Polyamide, wobei die Bisphenole der Formel

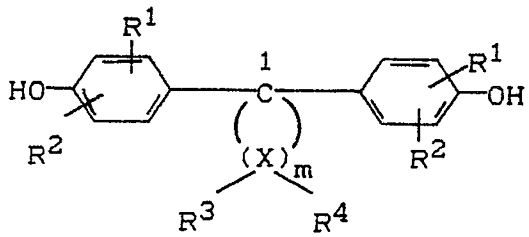

(I)

entsprechen.

Gegenstand der Erfindung ist weiterhin ein Verfahren zu ihrer Herstellung und ihre Verwendung für Formkörper, Folien, Fasern und anderen Gegenständen.

Polyamide sind eine seit vielen Jahren für eine Vielzahl praktischer Anwendungen bewährte Klasse von Polymeren, die nach verschiedenen Verfahren hergestellt, die aus sehr unterschiedlichen Polyamid-bildenden Bausteinen synthetisiert werden können und die im speziellen Anwendungsfall, allein oder auch in Kombination mit Ver arbeitungshilfsmitteln, polymeren Legierungspartnern oder auch mineralischen Verstärkungsmaterialien (wie z.B. Füllstoffe oder Glasfasern) zu Werkstoffen mit speziell eingestellten Eigenschaftskombinationen ausgerüstet werden können. So werden Polyamide in großen Mengen zur Herstellung von Fasern, Kunststoff-Formteilen und Folien, aber auch z.B. als Schmelzkleber und Hilfsmittel in einer Vielzahl von Anwendungen technisch verwendet.

Der Zusatz niedermolekularer organischer Verbindungen zu teilkristallinen Polymeren führt im allgemeinen aufgrund der verringerten Kohäsionsenergie zwischen den Molekülsegmenten im amorphen Bereich zu leichterfließenden Materialien. Gleichzeitig wird aber auch die Glastemperatur (Tg) zu tieferen Temperaturen verschoben. (U.T. Kreibich und R. Schmid in "Polymere Werkstoffe", Band 1, S. 312, Georg Thieme Verlag 1985). Dies hat zur praktischen Konsequenz, das gewisse mechanische Eigenschaften, z.B. die Festigkeiten (Biegefestigkeit, Reißfestigkeit) sowie im allgemeinen auch die Wärmeformbeständigkeiten erniedrigt werden.

Es ist bekannt, das gewisse Bisphenole die Wasseraufnahme von Polyamiden deutlich erniedrigen sowie auch z.B. die Festigkeiten verbessern (EP-A 240 887 und DE-OS 3 610 595).

Hierbei handelt es sich aber im allgemeinen um Bisphenole, deren Glastemperaturen niedriger als die der Polyamide (üblicherweise ca. 45 - 60° C) liegen. Sie bewirken zwar im spritzfrischen Zustand erhöhte Festigkeiten und Steifigkeit, jedoch bleiben diese vorteilhaften Eigenschaftsverbesserungen im konditionierten Zustand nicht erhalten. Es wäre nun wünschenswert, die Festigkeiten sowie die Steifigkeit und die Fließfähigkeit und/oder die Wärmeformbeständigkeit dieser schon sehr wertvollen Polyamidmassen, insbesondere im konditionierten Zustand, noch weiter zu verbessern.

Überraschend und nicht vorhersehbar wurde nun gefunden, daß PA-Formmassen auf Basis von Bisphenolen, deren Glastemperaturen höher als die der Polyamide liegen, gegenüber solchen, die mit Bisphenolen niedrigerer $T_g$ ausgerüstet sind, verbesserte Festigkeiten und Steifigkeit (insbesondere im konditionierten Zustand) aufweisen, wobei auch die Wärmeformbeständigkeit oder die Fließfähigkeit oder beide zusammen erhöht sein können. Weiterhin weisen sie im allgemeinen eine erhöhte Kristallisationsgeschwindigkeit auf.

Gegenstand der Erfindung sind daher Polyamid-Formmassen unter Zusatz von Bisphenolen, dadurch gekennzeichnet, das sie zu

1) 70-99,9 Gew.-%, bevorzugt 80-98 Gew.-% und besonders bevorzugt 85-95 Gew.-%, aus üblichen Polyamiden, insbesondere Polyamid 6 und Polyamid 66 und 6/66-Copolyamiden,

2) 0,1-30 Gew.-%, bevorzugt 2-20 Gew.-% und besonders bevorzugt 5-15 Gew.-%, aus Bisphenolen der allgemeinen Formel (I), mit höherer Glastemperatur ($T_g$) als das jeweilige PA1) der allgemeinen Formel (I),

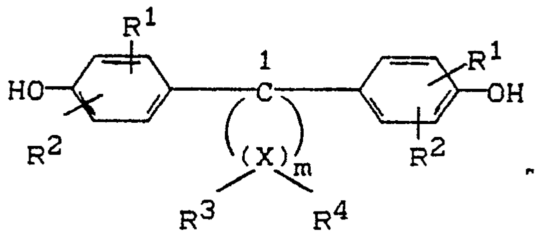 (I)

worin
$R^1$ und $R^2$ unabhängig voneinander Wasserstoff (besonders bevorzugt), Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,
m eine ganze Zahl von 4 bis 7, bevorzugt 4 oder 5,
$R^3$ und $R^4$, für jedes X individuell wählbar, unabhängig voneinander Wasserstoff oder $C_1$-$C_6$-Alkyl
und
X Kohlenstoff bedeuten,
mit der Maßgabe, das an mindestens einem Atom X $R^3$ und $R^4$ gleichzeitig Alkyl bedeuten,
sowie gegebenenfalls, zusätzlich zu 1) und 2),

3) bis 150 Gew.-%, z.B. 0,001-150 Gew.-%, insbesondere 0,2-100 Gew.-%, bezogen auf die Summe der Gewichte von 1) und 2), übliche Zusatzstoffen, enthalten.

Gegenstand der Erfindung ist auch ein Verfahren zu ihrer Herstellung sowie ihre Verwendung zur Herstellung von Formkörpern, Folien, Fasern und anderen Gegenständen, z.B. nach Verfahren des Spritzgusses, der Extrusion und anderen mehr.

Die Bisphenole der Formel I, ihre Herstellung und ihre Verwendung, gegebenenfalls in Kombination mit anderen Bisphenolen, zur Herstellung von Homopolycarbonaten und Copolycarbonaten, ist Gegenstand der deutschen Patentanmeldung P 3 832 396.6 (Le A 26 344).

Hierbei sind an einem bis zwei Atomen X, insbesondere nur an einem Atom X, $R^3$ und $R^4$ gleichzeitig Alkyl. Bevorzugter Alkylrest ist Methyl; die X-Atome in $\alpha$-Stellung zu dem di-phenyl-substituierten C-Atom (C-1) sind bevorzugt nicht dialkylsubstituiert, dagegen ist die Alkyl-di-substitution in $\beta$-Stellung zu C-1 bevorzugt.

Insbesondere sind hierbei bevorzugt Dihydroxydiphenylcycloalkane mit 5 und 6 Ring-C-Atomen im cycloaliphatischen Rest (m = 4 oder 5) in Formel I wie beispielsweise die Diphenole der Formeln

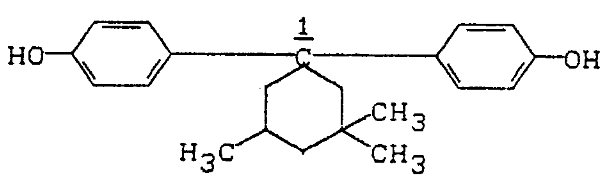 (Ia),

1,1-Bis-(4-hydroxyphenyl)-3,3,5-trimethylcyclohexan

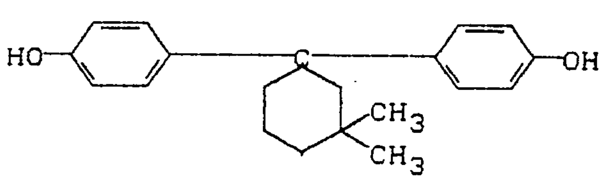 (Ib),

1,1-Bis-(4-hydroxyphenyl)-3,3-dimethylcyclohexan

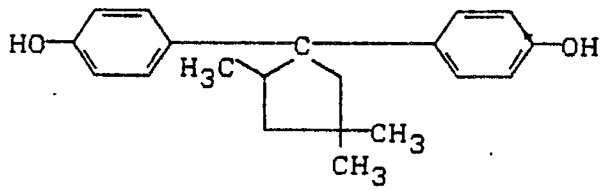

(Ic) und

1,1-Bis-(4-hydroxyphenyl)-3,3,5-trimethylcyclopentan

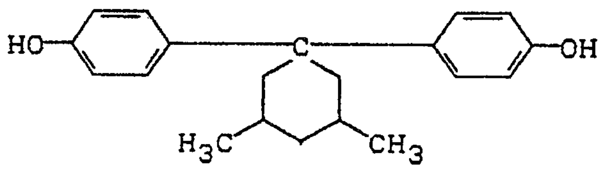

(Id)

1,1-Bis-(4-hydroxyphenyl)-3,5-dimethylcyclohexan,

wobei das 1,1-Bis-(4-hydroxyphenyl)-3,3,5-trimethylcyclohexan (Formel Ia) besonders bevorzugt ist.

Die erfindungsgemäß einzusetzenden Bisphenole werden vorzugsweise zu 2 bis 20 Gew.-%, besonders bevorzugt zu 5 bis 15 Gew.-%, bezogen auf die Mischung aus 1) und 2), eingesetzt.

Als Polyamide sind beispielsweise geeignet:

PA6, 66, 610, 11, 12, 1010, 1012, 1212, 69 und 6/66-Copolyamide, wie sie im Stand der Technik beschrieben sind. Sie sind üblicherweise teilkristallin und weisen Glastemperaturen im Bereich von 50-60° C oder weniger auf.

Besonders bevorzugt sind PA-6 und PA-6,6, insbesondere mit relativen Viskositäten (gemessen in 1 % Lösung in m-Kresol bei 25° C) von 2,5 bis 5,5, bevorzugt von 2,7 bis 4,5.

Als Zusatzstoffe 3) sind beispielsweise geeignet:

Verstärkungs- bzw. Füllstoffe (Glasfasern, mineralische Füllstoffe, Glaskugeln etc.), polymere Legierungspartner, bevorzugt solche, wie sie als Schlagzähmodifikatoren bekannt sind, z.B. auf Dien-, Olefin-, Acrylat-, und Silikon-Basis, wobei z.B. auch Copolymerisate, Pfropfpolymerisate und mehrschalige Polymerisate geeignet sind; Antioxidantien, UV-Stabilisatoren, Pigmente, Farbstoffe, übliche Verarbeitungshilfen (z.B. Entformungsmittel), Weichmacher, Nukleierungsmittel, Flammschutzmittel, übliche Bisphenole, Alkylphenol-Formaldehyd-Novolake u.a.m., wie sie im Stand der Technik beschrieben sind, allein oder im Gemisch.

Die Bisphenolkomponente (I) kann mit den Polyamid-Komponente schon gemeinsam in den Einfüllstutzen des Extruders eindosiert oder zu einem späteren Zeitpunkt während der Extrusion den zu extrudierenden Massen zugesetzt werden. Die Herstellung der erfindungsgemäßen Polyamidmassen kann auch in mehreren einzelnen Vermischungsschritten erfolgen.

Zur Herstellung der erfindungsgemäßen Mischungen eignen sich die üblichen bekannten Mischaggregate. Doppelschneckenextruder werden bevorzugt eingesetzt.

Die erfindungsgemäßen, mit Bisphenolen (deren $T_g$ höher als die der Polyamide liegt) modifizierten Polyamide zeigen gegenüber dem reinen PA eine deutlich erhöhte Fließfähigkeit, Steifigkeit und Festigkeit auch im konditionierten Zustand, sowie eine reduzierte Wasseraufnahme und Kristallisationsgeschwindigkeit. Im Vergleich zu mit Bisphenolen, deren $T_g$ niedriger liegt als die des Polyamids, modifizierten PA weisen sie im allgemeinen eine erhöhte Festigkeit sowie eine erhöhte Kristallisationsgeschwindigkeit auf. Weiterhin sind entweder die Fließfähigkeit oder die Wärmeformbeständigkeit, oder, besonders unerwartet, beide erhöht. Weiterhin zeichnen sie sich überraschend durch deutlich höhere Festigkeiten und Steifigkeiten im konditionierten Zustand aus.

Die neuen Formmassen eignen sich besonders zur Herstellung von Formkörpern nach dem Spritzgießverfahren, insbesondere für großflächige und komplizierte Formteile, die sonst nur mit hohem technischem Aufwand bei der Verarbeitung, mit Oberflächenstörungen, oder oft gar nicht herstellbar sind. Auch zur Herstellung von Fasern und Folien eignen sie sich.

Gegenstand der Erfindung sind auch die Formkörper, Folien, Fasern und andere Gegenstände aus den erfindungsgemäßen Formmassen.

Vorzugsweise eignen sich die Produkte für Anwendungen im Automobilbau (Stoßfänger, Spoiler, Karosserieteile, Radkappen etc.) und im Elektrosektor.

Die folgenden Beispiele dienen mit ihren typischen Einsatzstoffen im typischen Mengenbereich auch für die in der Beschreibung genannten Komponenten zur Erläuterung der Erfindung, ohne sie darauf einzuschränken.

## Beispiele

$\eta_{rel}$-Werte beziehen sich auf 1 %ige Lösungen in m-Kresol bei 25° C. Prozentangaben beziehen sich auf das Gewicht. Thermische Daten wurden per DSC bestimmt.

### Beispiel 1 und Vergleichsbeispiele 1 + 2

Die Glastemperaturen der angegebenen Bisphenole wurden in der Art gemessen, daß die Bisphenole erst aufgeschmolzen und dann durch Kühlen mit flüssigem Stickstoff in den glasartigen Zustand überführt wurden. Anschließend kann aus der DSC-Kurve die Glastemperatur bestimmt werden.

Die Daten für ein erfindungsgemäß und zwei nach der Lehre der DE-OS 3 610 595 einzusetzende Bisphenole sind in Tabelle 1 angegeben.

Tabelle 1

| Beispiel | Bisphenol | $T_g$ [°C] |
|---|---|---|
| 1 | I | 75,4 |
| Vgl. 1 | II | 37,0 |
| Vgl. 2 | III | 48,7 |

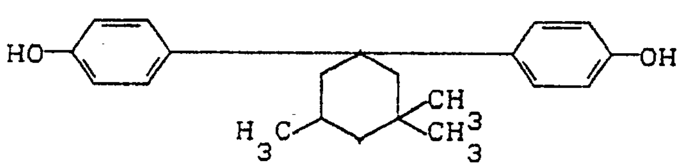

I

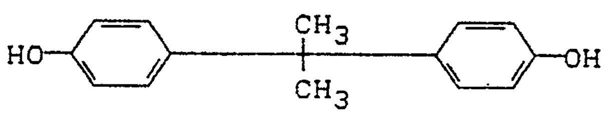

II

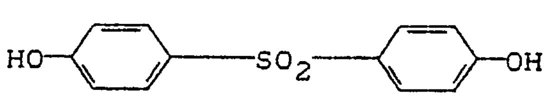

III

Beispiel 2 und Vergleichsbeispiel 3

Ein 30 % glasfaserverstärktes PA 66 ($\eta_{rel}$ = 2,9) wurde mit je 7 % Bisphenol I bzw. Bisphenol II compoundiert (ZSK 53) und nach üblicher Aufarbeitung zu Prüfkörpern verarbeitet. Mechanische sowie thermische Eigenschaften dieser Formmassen sind in Tabelle 2 enthalten.

Beispiel 3 und Vergleichsbeispiel 4

In derselben Weise wurde ein 30 % glasfaserverstärktes PA6 ($\eta_{rel}$ = 2,9), das noch 5 % eines Kern-Mantel-Elastomeren, aufgebaut aus vernetztem Polybutadien als Kern und Polymethylmethacrylat als Hülle, enthielt, modifiziert (s. Tabelle 2)

Beispiel 4 und Vergleichsbeispiel 5

In derselben Weise wurde ein 30 % mineralgefülltes PA6 ($\eta_{rel}$ = 2,9) modifiziert (s. Tabelle 2).

Die Glastemperaturen von PA6 bzw. 66 betragen im trockenen Zustand ca. 50° C (J. Brandrup, E.H. Immergut; Polymer Handbook 2nd Ed., John Wiley & Sons, New York 1975).

Tabelle 2

| Eigenschaft | Beispiel | Vgl. 3 | | 2 | | Vgl. 4 | | 3 | | Vgl. 5 | | 4 | |
|---|---|---|---|---|---|---|---|---|---|---|---|---|---|
| Bisphenol | | II | | I | | II | | I | | II | | I | |
| Additiv-Menge | % | 7 | | 7 | | 7 | | 7 | | 7 | | 7 | |
| Aschegehalt | % | 30,3 | | 30,5 | | 30,2 | | 30,4 | | 29,9 | | 30, | |
| Krist.-Temp.2) | °C | 227 | | 229 | | 185 | | 186 | | 184 | | 185 | |
| Krist.-Wärme | J/g | 36 | | 33 | | 33 | | 33 | | 39 | | 37 | |
| Krist.-Zeit isotherm 245°C | min | >10 | | >10 | | 6,5 | | 5,5 | | 10 | | 10 | |
| Fließspirale1) (290°C/80 bar) | cm | 79 | | 83 | | 63 | | 61 | | 48 | | 49 | |
| Wasseraufnahme nach ISO 1110 | % | 1,4 | | 1,4 | | 1,3 | | 1,2 | | 1,8 | | 1,8 | |
| nach Sättigung | % | 3,9 | | 4,0 | | 4,3 | | 4,6 | | 4,7 | | 5,0 | |
| spritzfrisch/konditioniert | | sprf. | kond.5) | sprf. | kond.5) | sprf. | kond.5) | sprf. | kond.5) | sprf. | kond.5) | sprf. | kond.5 |
| Reißfestigkeit3) | MPa | 172 | 103 | 177 | 121 | 162 | 94 | 168 | 110 | 81 | 46 | 88 | 53 |
| Reißdehnung3) | % | 4 | 9 | 3 | 6 | 4 | 10 | 4 | 7 | 5 | 80 | 2 | 43 |
| Zug-E-Modul3) | MPa | 10100 | 5700 | 9800 | 7800 | 9900 | 5200 | 9700 | 7100 | 5500 | 1400 | 5500 | 2600 |

Tabelle 2 (Fortsetzung)

| Eigenschaft | Beispiel | Vgl. 3 | | 2 | | Vgl. 4 | | 3 | | Vgl. 5 | | 4 | |
|---|---|---|---|---|---|---|---|---|---|---|---|---|---|
| Bisphenol | | II | | I | | II | | I | | II | | I | |
| Additiv-Menge | % | 7 | | 7 | | 7 | | 7 | | 7 | | 7 | |
| Aschegehalt | % | 30,3 | | 30,5 | | 30,2 | | 30,4 | | 29,9 | | 30, | |
| spritzfrisch/ konditioniert | | sprf. | kond.5) | sprf. | kond.5) | sprf. | kond.5) | sprf. | kond.5) | sprf. | kond.5) | sprf. | kond.5 |
| Biegesp. 3,5%4) | MPa | 252 | 128 | 256 | 169 | 224 | 110 | 235 | 150 | 117 | 33 | 135 | 51 |
| Biegefestigkeit4) | MPa | 267 | 165 | 267 | 195 | 242 | 138 | 253 | 173 | 125 | 46 | 144 | 64 |
| Randfaserdehnung4) | % | 4 | 7 | 4 | 6 | 4 | 7 | 4 | 6 | 5 | 8 | 5 | 7 |
| Biege E-Modul4) | MPa | 8700 | 4900 | 8500 | 6600 | 8000 | 4600 | 8100 | 6200 | 4300 | 1200 | 4800 | 2700 |
| IZOD an 23°C | $KJ/m^2$ | 38 | 67 | 34 | 44 | 67 | 77 | 64 | 63 | 60 | ng | 30 | 210 |
| -30°C | $KJ/m^2$ | 32 | 35 | 32 | 33 | 51 | 52 | 54 | 51 | 33 | 40 | 27 | 34 |
| IZOD ak 23°C | $KJ/m^2$ | 8 | 11 | 7 | 8 | 14 | 20 | 13 | 15 | 6 | 13 | 6 | 8 |
| HDT Meth. A | °C | 223 | -- | 214 | -- | 178 | -- | 178 | -- | 57 | -- | 61 | -- |

1) Zur Erkärung siehe DE-OS 3 612 159/EP-A-240887; höhere Werte bedeuten bessere Fließfähigkeit
2) Bestimmt durch DSC (dynamische Kristallisation); Kühlrate: 40 K $min^{-1}$
3) Bestimmt durch Zugversuch
4) Bestimmt durch Biegeversuch
5) Konditioniert nach ISO 1110

## Ansprüche

1. Thermoplastisch verarbeitbare Polyamid-Formmassen unter Zusatz von Bisphenolen, dadurch gekennzeichnet, daß sie zu

1) 70-99,9 Gew.-% übliche Polyamide,

2) 0,1-30 Gew.-% Bisphenole der allgemeinen Formel (I), mit höherer Glastemperatur ($T_g$) als das jeweilige PA1),

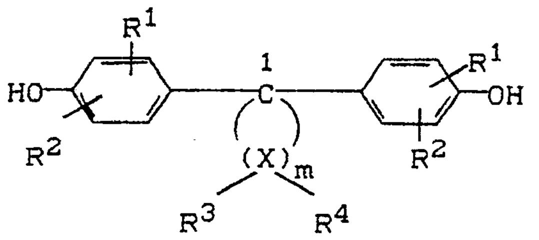

(I)

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$, für jedes X individuell wählbar, unabhängig voneinander Wasserstoff oder $C_1$-$C_6$-Alkyl und

X Kohlenstoff bedeuten,

mit der Maßgabe, daß an mindestens einem Atom X $R^3$ und $R^4$ gleichzeitig Alkyl bedeuten,

sowie gegebenenfalls zusätzlich zu 1) und 2),

3) bis zu 150 Gew.-%, bezogen auf die Summe der Gewichte von 1) und 2), übliche Zusatzstoffe, enthalten.

2. Polyamid-Formmassen nach Anspruch 1, dadurch gekennzeichnet, das als Bisphenole der allgemeinen Formel I bevorzugt die der Formeln (Ia) bis (Id) und besonders bevorzugt das 1,1-Bis-(4-hydroxyphenyl)-3,3,5-trimethylcyclohexan (Ia) enthalten.

3. Polyamid-Formmassen nach Ansprüchen 1 und 2, dadurch gekennzeichnet, das sie übliche aliphatische teilkristalline Polyamide mit Glastemperaturen kleiner als die der Bisphenole I enthalten, besonders bevorzugt PA6, 66 sowie Copolyamide auf Basis von PA6 bzw. 66.

4. Polyamidmassen nach Ansprüchen 1 bis 3, dadurch gekennzeichnet, daß sie zu

1) 80-88 Gew.-% übliche Polyamide und

2) zu 2-80 Gew.-% Bisphenole der allgemeinen Formel (I), mit höherer Glastemperatur ($T_g$) als das jeweilige Polyamid, enthalten.

5. Polyamidmassen nach Ansprüchen 1 bis 3, dadurch gekennzeichnet, daß sie zu

1) 85-95 Gew.-% übliche Polyamide und

2) 15-5 Gew.-% Bisphenole der allgemeinen Formel (I), mit höherer Glastemperatur ($T_g$) als das jeweilige Polyamid, enthalten.

6. Verfahren zur Herstellung der Formmassen nach Ansprüchen 1 und 2, dadurch gekennzeichnet, daß die Komponenten in der Schmelze, bevorzugt in Extrudern oder Knetern, in einem oder mehreren Schritten, miteinander vermischt werden.

7. Verwendung der Formmassen nach Ansprüchen 1 bis 5 zur Herstellung von Formkörpern, Folien, Fasern und anderen Gegenständen.

8. Formkörper, Folien, Fasern und andere Gegenstände aus Formmassen nach Ansprüchen 1 bis 5.